# EUROPÄISCHE PATENTANMELDUNG

(11) **EP 0 955 282 A1**
(43) Veröffentlichungstag der Anmeldung: **10.11.1999**
(21) Anmeldenummer: 99108721.4
(22) Anmeldetag: 02.05.1999
(51) Int. Cl.: C04B 41/71, E02B 3/16, E04B 1/66

(54) **Beschichtung für Baukörperoberflächen, insbesondere für Wasserbauten, und zugehöriges Herstellungsverfahren**

(30) Priorität: 03.05.1998 CH 98798
(71) Anmelder: Prölss, Ludwig, 2540 Grenchen (CH)
(72) Erfinder: Prölss, Ludwig, 2540 Grenchen (CH)
(74) Vertreter: Fiedler, Otto Karl, Dipl.-Ing.

(57) **Zusammenfassung**

Beschichtung, die einerseits zuverlässigen Schutz der Baukörperoberflächen gegen statische und vor allem auch dynamische Druck-, Zug- und Scherbeanspruchungen sowie gegen entsprechende Dauerwechselbeanspruchungen und andererseits bei gegebener Dicke und gegebener Festigkeit und Härte bzw. Rissdehnung im Bereich der Beschichtungsaussenseite eine verbesserte Ueberbrückungsfähigkeit für Risse in der Körperoberfläche ermöglicht.

Die Beschichtung umfasst mindestens zwei wenigstens teilweise aus polymerem Werkstoff bestehende Schutz- schichten (1,2), die bezüglich der Baukörperoberfläche (O) übereinanderliegend angeordnet und miteinander schub- und zugfest verbunden sind. Mindestens eine mit Blickrichtung auf die Baukörperoberfläche (O) untenliegende erste Schutzschicht (1) ist als verformungsweiche Polster- und/oder Entkopplungs-und/oder Dämpfungsschicht und mindestens eine mit Blickrichtung auf die Baukörperoberfläche (O) darüberliegende zweite Schutzschicht (2) als Panzer- und/oder Aabdichtungsschicht von hoher Festigkeit, insbesondere hoher Kerb- und/oder Weiterreissfestigkeit, und/oder von hoher Dichtheit ausgebildet.

## Beschreibung

Die Erfindung betrifft eine Beschichtung für Baukörperoberflächen, vor allem Betonoberflächen, insbesondere von durch Eisanfall beanspruchten Wasserbauten. Zum Gegenstand der Erfindung gehören auch Herstellungsverfahren für solche Beschichtungen sowie eine spezielle Verwendung bzw. Anwendung.

Baukörperoberflächen im allgemeinen und solche von Wasserbauten im besonderen sind einer Mannigfaltigkeit von praktisch unvermeidbaren, schädigenden und zerstörenden Einflüssen ausgesetzt, die - wenn nicht sogar auf ein unerwartetes und daher katastrophales Versagen der Standfestigkeit - so doch auf eine Verminderung der Gebrauchsdauer hinwirken. Dazu gehören zunächst örtlich konzentrierte mechanische Beanspruchungen statischer und vor allem dynamischer Art, die mit einer sofortigen oder nach gewissen Lastwechselzahlen eintretenden Überschreitung der massgebenden Spannungsgrenzwerte im Baukörpermaterial verbunden sind. Rissbildung und fortschreitendes Eindringen von korrodierenden Medien bzw. die Notwendigkeit einer Überwachung ist die Folge und besonders in schwer zugänglichen Bereichen des Baukörpers mit hohem Aufwand verbunden.

Im Ergebnis Gleiches gilt ferner für eine Primärkorrosion, d.h. eine unmittelbar und nicht erst nach mechanisch bedingter Rissbildung einsetzende Oberflächenkorrosion, die bei entsprechender Einwirkungsdauer ebenfalls zu tiefgreifenden Anfressungen oder Leckage des Betonkörpers führen und Einlass für nun verstärkt korrodierende Umgebungs- bzw. Inhaltsstoffe schaffen kann.

Weiterhin erfolgt Rissbildung in Baukörperoberflächen durch inhärente Effekte auch ohne äussere Einwirkung. Dies gilt insbesondere für Betonkörper, in denen sowohl kurz nach der Herstellung infolge Setzung und Schwindung des Grundkörpers wie auch während der Gebrauchsdauer infolge Temperaturschwankungen und entsprechender Wechseldehnung in Verbindung mit der Sprödheit des Grundmaterials Mikrorisse entstehen. Ohne Schutzmassnahmen können durch diese Risse aggressive Medien eindringen und das Grundmaterial bzw. metallische Armierungen und dergl. durch Korrosion beschädigen. Ausserdem führen wasserhaltige Medien bei Frost zu einer sekundären Rissbildung bzw. zu einem verstärkten Rissfortschritt mit Risserweiterung.

Alle diese Risikofaktoren haben besonders grosse Bedeutung u.a. für Wasserbauten, wie Staudämme, Deich- und Gezeitenbauwerke, bei denen Beschädigungen mit einem hohen Gefahrenpotential verbunden sind. Unter den äusseren mechanischen Schadensquellen ist hier die statische und dynamische Beanspruchung durch Eisanfall hervorzuheben. Bei entsprechenden Temperaturverhältnissen können sich hier enorme Eismassen und - vor allem in Verbindung mit Pegelschankungen - entsprechende Massenkräfte ergeben, die nicht nur statisch, sondern auch ausgeprägt stossartig auf die betroffenen Baukörper einwirken, und zwar im Fall von Eisbruch oder Schollenbildung mit hoher örtlicher Konzentration von Stosskräften.

Für eine Baukörperbeschichtung ergeben sich daraus folgende, grundsätzlich gleichwertige und in der Praxis gemeinsam auftretende Anforderungen, nämlich
1. Schutz gegen Rissbildung in der Baukörperoberfläche infolge
1.1 mechanischer Primärverletzung bzw.
1.2 Primärkorrosion, sowie
2. selbsttätige, zuverlässige und dauerhafte Überbrückung und Abdichtung auftretender Oberflächenrisse, d.h. Erhaltung einer intakten Schutzschicht trotz Rissbildung.

Hinsichtlich der vorgenannten Beschichtungsfunktionen bestehen folgende Verbesserungsbedürfnisse, vor allem in den Anwendungen für Betonoberflächen:

Insbesondere bei grösserer Intensität der erwähnten Beanspruchungen versagen die üblichen, vergleichsweise hochfesten, jedoch unmittelbar mittels Haftvermittlern auf einer starren Baukörperoberfläche verankerten Polymer-Beschichtungen. Sie werden durch wiederholt auftretende, örtlich konzentrierte Stoss- oder Schlagbeanspruchungen zerstossen oder zerrieben bzw. im Fall von entsprechenden Zugbeanspruchungen normal zur Baukörperoberfläche zerrissen. Beanspruchungen der letztgenannten Art ergeben sich z.B. durch an Baukörperoberflächen angefrorene, in Bewegung geratende Eisschollen. Eine in dieser Weise beschädigte Beschichtung kann die Baukörperoberfläche weder gegen Primär- oder Sekundär-Rissbildung und Risserweiterung bzw. -vertiefung noch gegen Primärkorrosion schützen.

Was die Rissüberbrückung betrifft, so sollen gemäss heutigen Praxisanforderungen schon Körperrissweiten bis etwa 2 mm noch sicher überbrückt werden. Damit ergeben sich entsprechend hohe Beschichtungs-Mindestdicken. Deren Begrenzung und möglichst Verminderung ist aus wirtschftlichen Gründen erwünscht. Vor allem ist aber selbst bei annehmbarer Beschichtungsdicke im Hinblick auf nicht zu hohe Anforderungen an die kostenintensive Arbeitsgenauigkeit beim Beschichten eine hohe, rissfreie Verformungsfähigkeit der Beschichtung im Sinne einer "Ueberbrückungsreserve" erwünscht. Auch in dieser Hinsicht sind die bekannten Beschichtungen verbesserungsbedürftig.

Aufgabe der Erfindung ist daher die Schaffung einer Beschichtung, die einerseits einen längerfristig zuverlässigen Schutz von Baukörperoberflächen, insbesondere von Betonoberflächen, gegen statische und vor allem auch dynamische Druck-, Zug- und Scherbeanspruchungen sowie gegen entsprechende Dauerwechselbeanspruchungen und andererseits bei gegebener Dicke und gegebener Festigkeit und Härte bzw. Rissdehnung im Bereich der Beschichtungsaussenseite eine verbesserte Ueberbrückungsfähigkeit für Risse in der Körperoberfläche ermöglicht, und zwar insbesondere auch für relativ grosse Rissweiten. Die erfindungsgemässe Lösung dieser Aufgabe ist bestimmt durch die Merkmale des Anspruchs 1.

Wesentlich für die Wirksamkeit dieser Aufgabenlösung hinsichtlich der oben unter 1. genannten Funktionen ist die Kombination einer mit der Baukörperoberfläche - vorzugsweise durch eine Haftvermittlungsschicht - verbundenen, verformungsweichen ersten Schutzschicht, insbesondere einer Polsterschicht, und einer hochfesten bzw. hochdichten zweiten Schutzschicht, insbesondere einer Panzer- bzw. Abdichtungsschicht, die mit ersterer schub- und zugfest verbunden ist. Durch die erfindungsgemässe Schichtkombination wird der folgende, zweifache Schutzeffekt gegen mechanische Kraftangriffe erreicht:

Betreffend die Rissbildung im Baukörper ist zunächst ein Schutzeffekt aufzuzeigen, der durch den Kraftangriff selbst ausgelöst wird. Infolge der relativ grossen Verformbarkeit der ersten Schutzschicht ergibt sich nämlich in der zweiten Schutzschicht eine im wesentlichen allseitige, tangentiale Zugdehnung, die ihr Maximum im Bereich der Kraftangriffsstelle hat und infolge der Scherspannungsübertragung auf die erste Schutzschicht mit der Entfernung vom Kraftangriffsbereich rasch abnimmt. Im engeren Kraftangriffsbereich selbst überlagern sich zu diesen tangentialen Zugspannungen die unmittelbar zerstörungsträchtigen Kraft- und Spannungskomponenten. Hierbei handelt es sich vor allem um Druck- und Stosskräfte, aber auch Zug- und Scherkräfte mit entsprechenden Spannungskomponenten können auftreten, z.B. bei Wasserbauten infolge Anfrieren von grösseren Eiskörpern an die Beschichtung in Verbindung mit Wasserstandsschwankungen oder Wellenschlag.

Jedenfalls erzeugt der Kraftangriff im gefährdeten Bereich einen dreiachsigen Spannungszustand mit Überlagerung von tangentialen bzw. planaren Dehnungen einerseits und in Normalrichtung zur zweiten Schutzschicht wirkenden Spannungen bzw. von Scherspannungen andererseits. Die Dehnungen der zweite Schutzschicht sind aber mit einer tangentialen Reckung der makromolekularen, z.T. knäuelartigen Faserstruktur des Polymers der zweite Schutzschicht sowie mit einer entsprechenden Querkontraktion verbunden, was wiederum eine wesentliche Zunahme der Oberflächenhärte der zweite Schutzschicht zur Folge hat. Insgesamt ergibt sich also durch die Beanspruchung selbst eine erhöhte Widerstandsfähigkeit der Beschichtung. Dieser Effekt ist bei geeigneter, den jeweiligen Einsatzbedingungen angepasster Wahl des Polymermaterials vollständig oder mindestens weitgehend reversibel, so dass nach Fortfall der Belastung praktisch keine Restverformungen als Ausgangszustand für nachfolgende Belastungen verbleiben. Dies bietet Gewähr für eine hohe Dauerwechselfestigkeit.

Dieser Schutzeffekt hat sich insbesondere für Wasserbaubeschichtungen bei Beanspruchung Druck und Stoss durch scharfkantige Eismassen in der Praxis bewährt. Wie Untersuchungen gezeigt haben, übertrifft die Oberflächenhärte z.B. von niedrigvernetzten Urethanen in einem gemäss Vorstehendem gereckten Zustand diejenige von sogar tiefgefrorenem Eis, so dass insbesondere bei Wechselbelastung die Eiskanten durch Überschreiten der Verformungsbeständigkeit des Eises zerkleinert und damit unschädlich gemacht werden.

Des Weiteren ist für die erfindungsgemässe Schichtkombination ein Schutzeffekt zu nennen, der in einer Verteilung der Krafteinleitung auf grössere Bereiche der Baukörperoberfläche besteht. Dadurch werden die Maximalwerte der im Oberflächenbereich des Baukörpers auftretenden Spannungen wesentlich vermindert. Es ergibt sich also eine den jeweiligen Verhältnissen anzupassende Spannungs-Entkopplung zwischen zweite Schutzschicht und Baukörper mit Verflachung des Spannungsprofils. Dieser Schutzeffekt ist wiederum nicht nur gegen Druck- und Stosskräfte, sondern auch gegen Zug- und Scherkräfte mit entsprechenden Spannungskomponenten in der Beschichtung wirksam, die insbesondere an Wasserbauten infolge Anfrierens von grösseren Eiskörpern an die Beschichtung auftreten können. Ausserdem wirkt die erste Schutzschicht entsprechend ihrer Beschaffenheit als verformungsweiches Polymer-Element in starkem Masse stoss- und schwingungsdämpfend, so dass auch intensive dynamische Beanspruchungen ohne Beschädigung der Baukörperoberfläche beherrschbar sind.

Für die Wirksamkeit der erfindungsgemässen Aufgabenlösung bezüglich der oben unter 2. genannten Funktion bei sich bildenden oder erweiternden Rissen in der Baukörperoberfläche ist wesentlich, dass örtliche, parallel zur Baukörperoberfläche wirkenden Zugspannungsspitzen, die sich zwangsläufig in dem über einem solchen aufklaffenden Riss befindlichen Bereich der zweite Schutzschicht bilden, in das Innere des Beschichtungsquerschnitts überführt und dort in der stark dehnbaren ersten Schutzschicht abgebaut werden. Selbst wenn über dem Körperriss an der Innenseite der zweite Schutzschicht ein Dehnungs-Anriss in Rechnung zu stellen sein sollte, so kann durch passende Minimaleinstellung des Zugspannungs-Verformungsmoduls und/oder des Scherspannungs-Verformungsmoduls in der ersten Schutzschicht sichergestell werden, dass der Anriss die Aussenfläche der Beschichtung nicht erreicht und somit mindestens die Dichtungsfunktion intakt bleibt.

Weiterbildungen und bevorzugte Ausführungsformen der Erfindung sind bestimmt durch die Merkmale der abhängigen Ansprüche, die insbesondere auch in vielfältigen gegenseitigen Kombinationen mit besonderen Vorteilen realisiert werden können.

So hat es sich für ein breites Anwendungsspektrum, vor allem auch für Wasserbau-Schutzbeschichtungen, als herausragend vorteilhaft erwiesen, wenn die erste Schutzschicht wenigstens teilweise aus mindestens einem niedrigvernetzten Polyurethan besteht, das bei einer Temperatur von 20°C einen Zugspannungs-Verformungsmodul E von höchstens etwa 5 N/mm² aufweist, vorzugsweise einen solchen von höchstens etwa 3 N/mm². Die Zug-Bruchdehnung ε _{ZB} ist bei einem solchen Material bevorzugt im Bereich zwischen etwa 1000 % und etwa 1900 % einzustellen, vorzugsweise auf einen Wert von etwa 1500 %. Mit solchen Einstellungen lassen sich Verformungen der ersten Schutzschicht sicherstellen, die auch bei stark konzentriertem Kraftangriff auf die Beschichtung Spielraum für eine ausreichende Tangentialdehnung und damit Verfestigung der zweite Schutzschicht sorgen. Zu einer Optimierung kommt es dabei erfahrungsgemäss auch auf das Verhältnis des Zugspannungs-Verformungsmoduls E bzw. des Scherspannungs-Verformungsmoduls G der ersten Schutzschicht zu dem jeweils entsprechenden Modulwert der zweite Schutzschicht an. Diese Verhältniswerte sollten 1 zu mindestens etwa 3 betragen und sind bei extremen Beanspruchungen und besonders hohen Sicherheitsanforderungen gegebenenfalls bis auf 1 zu mindestens etwa 5 und sogar 1 zu mindestens etwa 10 zu variieren.

Eine ebenfalls mindestens teilweise aus einem niedrigvernetzten Polyurethan bestehende zweite Schutzschicht sollte eine auf 20°C bezogene Zugfestigkeit σ _{ZB} von mindestens etwa 40 N/mm² aufweisen, vorzugsweise eine solche von mindestens etwa 60 N/mm². Der im Vergleich zur ersten Schutzschicht wesentlich höhere Zugspannungs-Verformungsmodul E der zweite Schutzschicht sollte optimierend im Bereich zwischen etwa 15 N/mm² und etwa 50 N/mm² eingestellt werden, vorzugsweise auf einen Wert von etwa 20 N/mm², ebenfalls auf 20°C bezogen, allerdings im allgemeinen in Verbindung mit einer relativ hohen Zug-Bruchdehnung ε _{ZB}, und zwar optimierend von mindestens etwa 100 %, vorzugsweise von mindestens etwa 500 %, wiederum bei 20°C.

Im Allgemeinen bieten die vorstehend diskutierten Erfindungsmerkmale eine vorteilhafte Lösung auch für die Erfindungsaufgabe, welche sich auf die oben unter 2. genannte Funktion der Rissüberbrückung bezieht. Dabei hat es sich insbesondere als vorteilhaft erwiesen, dass die erste Schutzschicht eine in Bezug auf die zweite Schutzschicht wenigstens annähernd gleiche oder grössere Dicke aufweist. Dies trägt in einfacher Weise zur Sicherung der erforderlichen, stärkeren Nachgiebigkeit der ersten Schutzschicht bei.

Gemäss einer in den vorliegenden Erfindungsgedanken enthaltenen Weiterbildung der Aufgabenlösung kann Extremfällen durch einen besonders weitgehenden Abbau von Spannungsspitzen in der Beschichtung Rechnung getragen werden, und zwar durch eine gezielte Ablösung der entkoppelnd wirkenden ersten Schutzschicht von der Körperoberfläche unter der Wirkung der im Rissbereich konzentriert erhöhten Scherspannungen zwischen Körperoberfläche und erster Schutzschicht. Mit der örtlichen Dehnung und Ausreckung der ersten Schutzschicht entstehen nämlich zwischen der ersten Schutzschicht und der Körperoberfläche bzw. der Haftvermittlungsschicht zusätzlich trennend wirkende Zugkraftkomponenten in Normalrichtung zur Körperoberfläche. Diese Normal-Zugkraftkomponenten gehen aus von dem mit der ersten Schutzschicht noch fest verbundenen Aussenteil der Beschichtung bzw. der zweiten Schutzschicht. Um nun die gezielte Ablösung sicherzustellen, sind die Verbindungsfestigkeiten zwischen der ersten Schutzschicht und der Körperoberfläche einerseits sowie zwischen der ersten Schutzschicht und der zweite Schutzschicht andererseits entsprechend einzustellen, nämlich gemäss einer besonderen Weiterbildung der Erfindung in solcher Weise, dass die Verbindungsfestigkeit zwischen der ersten Schutzschicht und der zweite Schutzschicht grösser bemessen ist als die Verbindungsfestigkeit zwischen der ersten Schutzschicht und der Baukörperoberfläche bzw. einer Haftvermittlungsschicht. Eine solche Bemessung der Verbindungsfestigkeit ist im allgemeinen ohne grossen Aufwand zu bewirken und sichert die im Bereich von bereits stark fortgeschrittenen bzw. breiten Rissen erwünschte Ablösung der ersten Schutzschicht vom Untergrund, womit ein enorm vergrössertes, verformbares Schichtvolumen für die Rissüberbrückung zur Verfügung steht.

Für extreme Bedingungen bzw. Anforderungen kann es sogar angezeigt sein, eine dehnungsfördernde Rissbildung auch innerhalb der ersten Schutzschicht in Kauf zu nehmen bzw. gezielt vorzubereiten. Dazu kann die erste Schutzschicht auf eine in Bezug auf die zweite Schutzschicht (2) geringere Zugfestigkeit σ _{ZB} und/oder eine ebensolche Scherfestigkeit τ _{SB} eingestellt werden. In einem solchen Fall kommt für niedrigvernetztes Polyurethan als Material der ersten Schutzschicht vorteilhaft eine Zugfestigkeit im Bereich zwischen etwa 20 N/mm² und etwa 35 N/mm², vorzugsweise eine solche von etwa 30 N/mm², in Betracht.

Unter Bezugnahme auf die Zeichnungen werden nun weitere Einzelheiten der Erfindung sowie bevorzugte Ausführungen und Weiterbildungen derselben erläutert. Hierzu zeigt schematisch vereinfacht und in stark vergrössertem Massstab, jeweils in einer potentiellen oder bereits realen Riss-Querschnittsebene:
- Fig.1: ein Beispiel einer üblichen Betonbeschichtung mit einem im Betonkörper entstehendem Riss und einem bis zur Beschichtung vorgedrungenen Riss mit örtlich konzentrierten Zugspannungstrajektorien,
- Fig.2: ebenfalls eine übliche Betonbeschichtung mit die Beschichtung durchdringendem Riss aus dem Betonkörper,
- Fig.3: eine erfindungsgemässe Beschichtung mit einem spitzkantigen, sich in die Beschichtung einpressenden Fremdkörper in einem zur Fremdkörperkante und zur Baukörperoberfläche rechtwinkligen Querschnitt,
- Fig.3a: ein Diagramm der Verteilung der in der Beschichtung gemäss Fig.3 wirkenden Tangential-Zugspannungen und Normal-Druckspannungen,
- Fig.4: einen Horizontalschnitt einer erfindungsgemässen Beschichtung mit Belastung durch einen anhaftenden Fremdkörper,
- Fig.5: einen Vertikal-Querschnitt ähnlich Fig.3 für eine erfindungsgemäss Beschichtung mit einem angefrorenen, kippmoment- bzw. zug- und druckspannungsübertragenden Eisblock,
- Fig.6: eine erfindungsgemässe Beschichtung mit Überbrückung eines durchgehend aufgeklafften Risses in einem Betonkörper und mit stark gedehnter, jedoch unversehrter Beschichtungs-Gesamtstruktur,
- Fig.7: eine Darstellung ähnlich zu Fig.6 für eine erfindungsgemässe Beschichtung mit durchgehend offenem Riss im Betonkörper und mit im Rissbereich durchtrennter erster Schutzschicht, jedoch bei schwach gedehnter und unversehrter Aussenstruktur der Beschichtung, und
- Fig.8: wiederum eine Darstellung entsprechend Fig.6 für eine erfindungsgemässe Beschichtung, wiederum mit durchgehend offenem Riss im Betonkörper, jedoch mit im Rissbereich vom Betonkörper abgelöster erster Schutzschicht und relativ schwach gedehnter, unversehrter Beschichtungs-Gesamtstruktur.

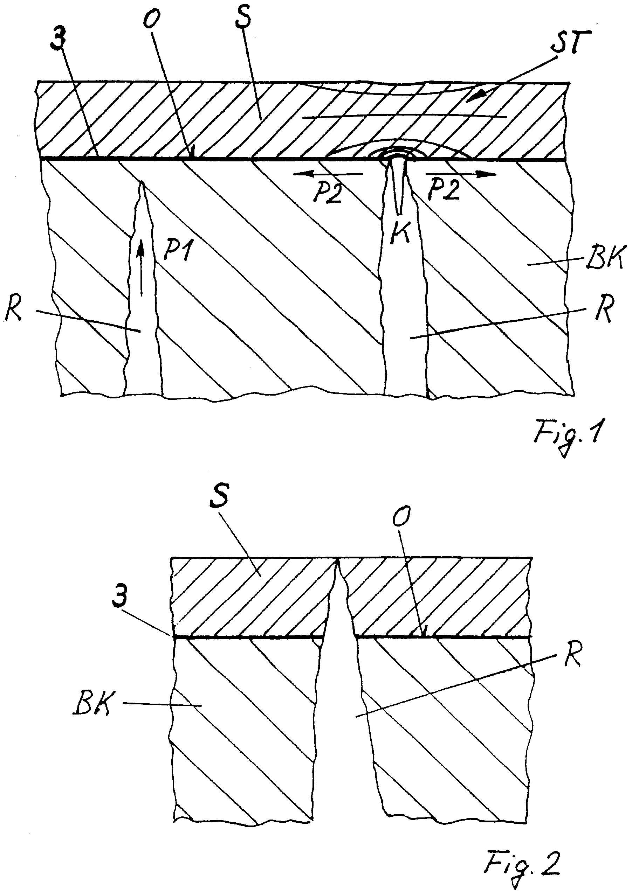

Die in Fig.1 und 2 angedeutete Beschichtung üblicher Art umfasst eine Schutzschicht S, die aus polymerem Werkstoff besteht und durch eine Haftvermittlungsschicht 3 mit der Baukörperoberfläche O fest verbunden ist. In Fig.1 ist links ein noch innerhalb des Betonkörpers befindlicher Riss R angedeutet, der in Richtung des Pfeils P1 gegen die Oberfläche O fortschreiten möge. Rechts in Fig.1 ist der Riss R in einem Fortschritt angedeutet, bei dem er die Oberfläche O unter Bildung beiderseitiger Risskanten K erreicht hat.

Infolge Risserweiterung gemäss Pfeilen P2 ergibt sich an der Innenseite der Schutzschicht S eine klaffende Rissöffnung mit auseinandergerückten Risskanten K. Dadurch wird dem zwischen den Kanten K befindlichen Bereich der Schutzschicht 1 eine starke örtliche Dehnung parallel zur Innenfläche dieser Schutzschicht und quer zur Risslängsrichtung (in der Darstellung verläuft der Riss R langgestreckt quer zur Zeichnungsebene) aufgezwungen. Dies ist mit dem Aufbau einer entsprechend starken örtlichen Zugspannungskonzentration an der Innenseite der Schutzschicht S verbunden, wie durch die vereinfachte Darstellung der zuge-hörigen Spannungstrajektorien ST veranschaulicht ist. Das Auseinanderrücken der Risskanten K bewirkt eine Durchtrennung der Haftvermittlungsschicht 3 und darüberhinaus - infolge der Zugspannungskonzentration praktisch vielfach unvermeidlich - einen Anriss an der Innenseite der Schutzschicht S. Wie in Fig.2 angedeutet, geht von diesem Anriss ein weiterer Riss-fortschritt in das Material der Schutzschicht S aus, der die Aussenseite dieser Schutzschicht erreicht und damit einen die Schutzwirkung zerstörenden, druchgehend klaffenden Riss in der Beschichtung hervorruft.

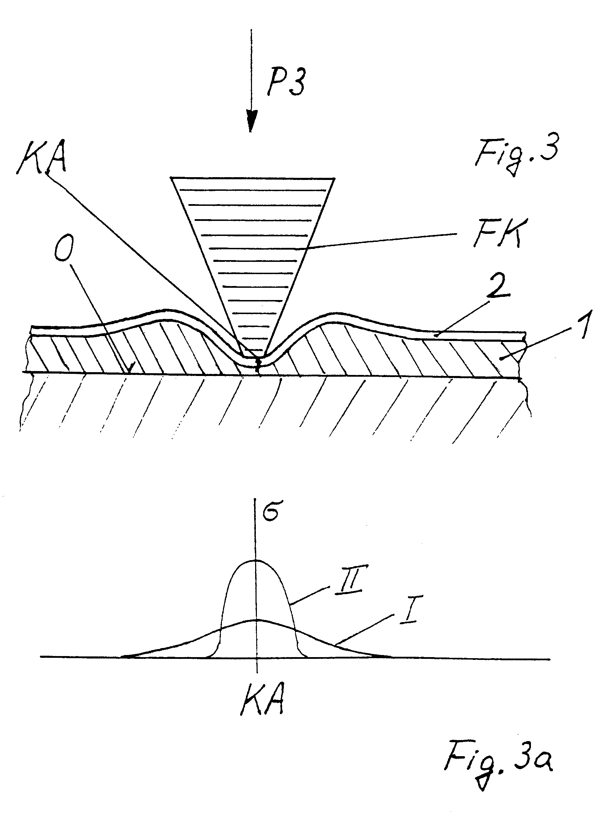

Bei der in Fig.3 angedeuteten Beschichtung erfindungsgemässer Art ist dagegen auf einer mit einem Betonkörper verbundenen Haftvermittlungsschicht 3 eine erste Schutzschicht 1 und darüber eine zweite Schutzschicht 2 angeordnet, die einen in Bezug auf die erste Schutzschicht geringeren Zugspannungs-Verformungsmodul E und/oder einen ebensolchen Scherspannungs-Verformungsmodul G aufweist und daher eine mehr oder weniger weitgehende Spannungs-Entkopplung zwischen der zweiten Schutzschicht 2 und der Haftvermittlungsschicht 3 bewirkt. Die beiden Schutzschichten sind miteinander flächenhaft scher- und zugfest verbunden.

Der gemäss Pfeil P3 in Normalrichtung zur Baukörperoberfläche O angreifende Fremdkörper FK presst mit seiner Kante KA die Beschichtung zusammen, wobei die Verformung hauptsächlich von der nachgiebigeren Schutzschicht 1 aufgenommen wird. Infolge der Volumen-Inkompressibilität des Polymermaterials bewirkt dies eine von den Flanken der Kante KA nach aussen gerichtete Verdrängung des Schichtmaterials mit wellenförmiger Aufwölbung der Beschichtungsoberfläche. Die Oberfläche des so gebildeten Rinnenprofils hat zwangsläufig eine - quer zur Rinne gemessen - grössere Ausdehnung, was entsprechende tangentiale Dehnungen und Zugspannungen in der zweiten Schutzschicht 2 mit einem Maximum an der Kraftangriffsstelle im Rinnengrund zur Folge hat. Wie bereits erläutert, bewirkt dies wiederum eine an der Kraftangriffsstelle maximale Steigerung der Härte und Widerstandsfähigkeit der Schutzschicht 2. Durch entsprechende Scherspannungen werden die Zugspannungen in der Schutzschicht 2 in die mit ihr flächenhaft verbundene Schutzschicht 1 und hier z.T. in Druckspannungen umgesetzt sowie weiter über die Haftvermittlungsschicht in die Baukörperoberfläche eingeleitet. Die hiermit verbundene, Materialverdrängung bewirkt eine seitliche Verbreiterung des Krafteinleitungsbereiches der Baukörperoberfläche und damit die erwünschte Verflachung und Maximalwertabsenkung der Spannungen. In Fig.3a ist das sich ergebende Querprofil der Druckspannung in der Kurve I und zum Vergleich das entsprechende Profil für Krafteinleitung ohne nachgiebige Polsterschicht in der Kurve II angedeutet.

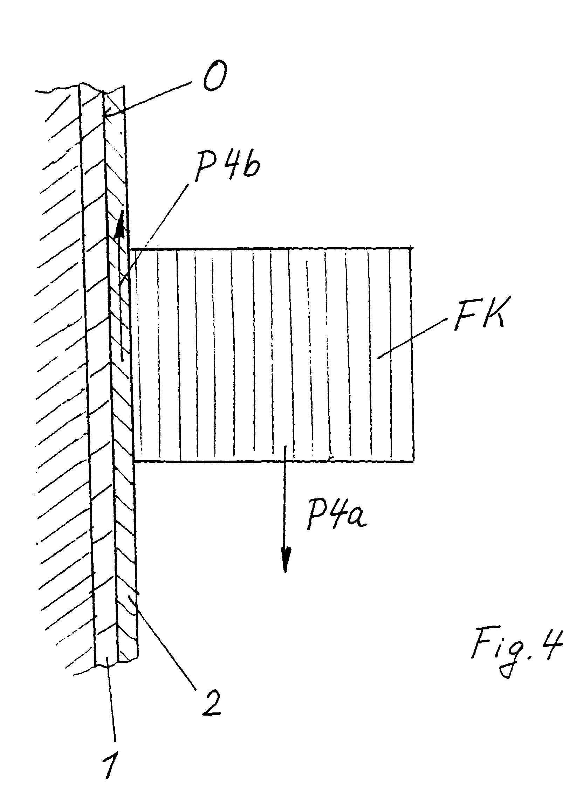

Bei der in Fig.4 im Horizontalschnitt angedeutete Beschichtung mit den Schutzschichten 1 und 2 ist eine Beanspruchung durch einen schwimmend angefrorenen Eisblock-Fremdkörper FK. Infolge Strömung oder Drift in Horizontalrichtung gemäss Pfeil P4a kann ein solcher Fremdkörper durch Pfeil P4b summarisch veranschaulichte Schub- und Zugspannungen in die Beschichtung einbringen. Auch in diesem Fall bewirkt die erfindungsgemässe Kombination von Polsterschicht und Panzerschicht eine Verteilung der eingeleiteten Kräfte auf grössere Flächen sowie infolge der tangentialen Zugspannungskomponenten eine Verhärtung bzw. Verfestigung der Panzerschicht.

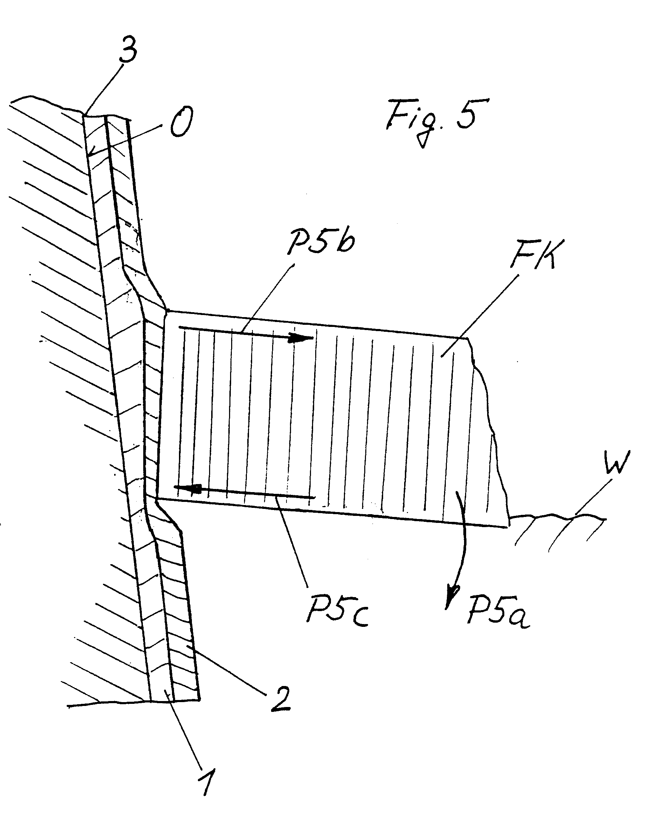

Fig.5 zeigt im Vertikal-Querschnitt eine erfindungsgemässe Beschichtung mit den Schutzschichten 1 und 2 unter einer Beanspruchung durch einen schwimmend angefrorenen Eisblock-Fremdkörper FK. Z.B. infolge Absenkung des Wasserspiegels W erzeugt der Fremdkörper gemäss Pfeil P5a ein von der Beschichtung aufzunehmendes Kippmoment mit durch Pfeile P5b und P5c veranschaulichten Druck- und Zugkräften und entsprechenden Verformungen in beiden Schutzschichten sowie mit Materialverschiebung in der als Polsterschicht ausgebildeten Schutzschicht 1. Wiederum bewirkt die erfindungsgemässe Kombination von Polsterschicht und Panzerschicht eine Verteilung der eingeleiteten Kräfte auf grössere Flächen sowie infolge der tangentialen Zugspannungskomponenten eine Verhärtung bzw. Verfestigung der Panzerschicht.

Die folgenden Darstellungen betreffen vor allem die Beschichtungsfunktion der Rissüberbrückung.

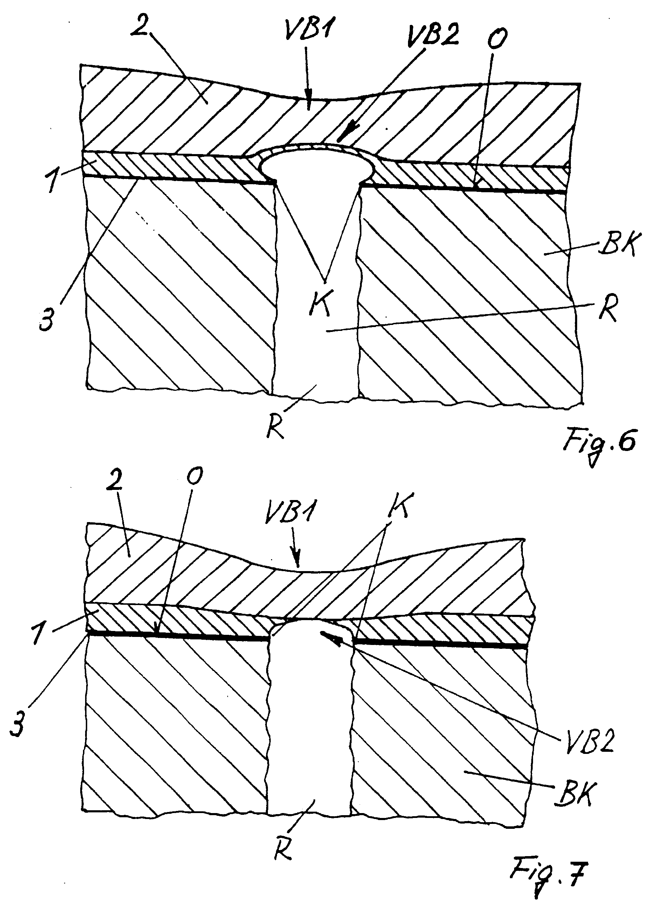

Der in Fig.6 angedeutete Zustand eines aus Beton bestehenden Baukörpers BK mit bereits zu dessen Oberfläche O vorgedrungenem Riss R und weit klaffenden Risskanten K stellt bereits eine Durchtrennung der Haftvermittlungsschicht 3 dar, jedoch kann sich eine Spannungsspitze in der Beschichtung infolge grosser Nachgiebigkeit und rissfreier Verformbarkeit der ersten Schutzschicht 1 nicht ausbilden. In dem hierfür massgebenden Verformungsbereich VB2 dieser Schutzschicht kann das Schutzschichtmaterial infolge der trotz extremer Verformung geringen Verspannung z.B. bis zu den Risskanten K über die Haftvermittlungsschicht mit dem Betonkörper verbunden bleiben. Jedenfalls erreichen nur vergleichsweise geringe Zug- und Scherspannungen die zweite Schutzschicht 2. Die Quer-Zugverformung der letzteren entspricht zwar wieder der klaffenden Rissbreite, jedoch steht hierfür der in Fig.6 angedeutete, in Rissquerrichtung breit ausgedehnte und daher spannungsarme Verformungsbereich VB1 zur Verfügung.

Bei der in Fig.7 angedeuteten Beschichtung erfindungsgemässer Art ist wieder im Bereich unter der zweiten Schutzschicht 2 eine entkoppelnde erste Schutzschicht 1 angeordnet, die jedoch eine in Bezug auf die zweite Schutzschicht 2 geringere Zugfestigkeit _{ZB} und/oder eine ebensolche Scherfestigkeit _{SB} aufweist. Wie in der Darstellung angedeutet, hat dies bei zur Baukörperoberfläche O vorgedrungenem Riss R und weit klaffenden Risskanten K nicht nur eine Durchtrennung der Haftvermittlungsschicht 3, sondern auch beabsichtigtermassen eine solche der ersten Schutzschicht 1 bewirkt. Der angestrebte Effekt, nämlich der Abbau von Spannungsspitzen im Rissbereich, ist grundsätzlich ebenso realisiert wie bei der Beschichtung nach Fig.6, indem nämlich im Verformungsbereich VB2 über dem Riss durch Ueberschreiten der entsprechend einzustellenden Zugfestigkeit bzw. Scherfestigkeit die zweite Schutzschicht durchtrennt ist. Dabei bildet sich im Beschichtungsquerschnitt ein Freiraum, der für die Schutzschicht 2 im Verformungsbereich VB1 eine Verteilung der durch die Rissweite bedingten Beschichtungsdehnung auf eine wesentlich grössere Aussenfläche der Beschichtung und damit einen Abbau von Spannungsspitzen bewirkt.

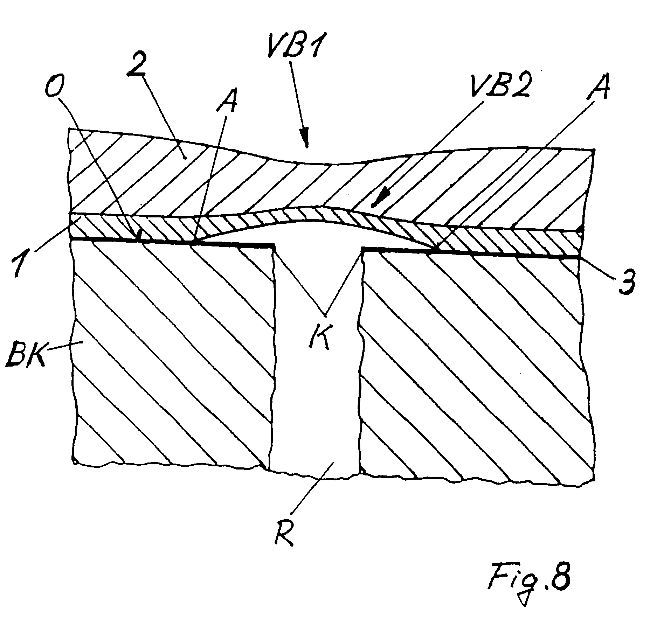

Auch bei der in Fig.8 angedeuteten erfindungsgemässen Beschichtung ist im Bereich unter der zweiten Schutzschicht 2 eine entkoppelnde erste Schutzschicht 1 angeordnet. Die Verbindungsfestigkeit zwischen diesen Schutzschichten ist hier grösser als die Verbindungsfestigkeit zwischen der ersten Schutzschicht und der Haftvermittlungsschicht 3 bzw. der Körperoberfläche O bemessen. Es entstehen nun wieder die im Rissbereich konzentriert erhöhten Scherspannungen zwischen Baukörperoberfläche und erster Schutzschicht. Zusätzlich entstehen mit der örtlichen Dehnung und Ausreckung der ersten Schutzschicht zwischen dieser und der Baukörperoberfläche bzw. der Haftvermittlungsschicht trennend wirkende Zugkraftkomponenten in Normalrichtung zur Baukörperoberfläche. Diese Normal-Zugkraftkomponenten gehen aus von der mit der ersten Schutzschicht noch fest verbundenen zweiten Schutzschicht. Durch entsprechende Einstellung der Verbindungsfestigkeiten wird erfindungsgemäss im Rissbereich eine gezielte Ablösung der ersten Schutzschicht von der Körperoberfläche erreicht. Im Beispiel gemäss Fig.8 ist eine relativ grosse Ablösungsweite zwischen den mit Abstand von den Risskanten angeordneten, parallel zur Risslängsrichtung verlaufenden Ablösungslinien A angedeutet. Die Folge dieser Ablösung ist ersichtlich eine besonders verformunsgarme Beanspruchung beider Schutzschichten in den Verformungsbereichen VB1 bzw. VB2 und ein hochgradiger Abbau von Spannungsspitzen.

Abschliessend seien kurz die wesentlichen Arbeitsschritte des erfindungsgemässen Herstellungsverfahrens für Schutzbeschichtungen in drei Varianten wiedergegeben.

Zufolge einer ersten Variante wird auf der Körperoberfläche O mindestens eine Haftvermittlungsschicht 3 und darüber mindestens eine entkoppelnde erste Schutzschicht 1 aufgebracht. Sodann wird eine Schutzschicht 2 gebildet, die im Fertigzustand einen in Bezug auf die Entkopplungsschicht höheren Zugspannungs-Verformungsmodul E und/oder einen ebensolchen Scherspannungs-Verformungsmodul G aufweist. Eine zweite Variante unterscheidet sich davon im wesentlichen durch die Bildung einer ersten Schutzschicht, die im Fertigzustand eine in Bezug auf die Schutzschicht 2 geringere Zugfestigkeit _{ZB} und/oder eine ebensolche Scherfestigkeit τ_{SB} aufweist. Bei einer dritten Variante werden die verschiedenen Schutzschichten in solcher Weise aufgebracht, dass im Fertigzustand die Verbindungsfestigkeit zwischen den beiden Schutzschichten grösser ist als die Verbindungsfestigkeit zwischen der erste Schutzschicht und der Haftvermittlungsschicht bzw. der Baukörperoberfläche O bemessen ist.

## Patentansprüche

1. Beschichtung für Baukörperoberflächen, vor allem Betonoberflächen, insbesondere von durch Eisanfall beanspruchten Wasserbauten, gekennzeichnet durch die Kombination folgender Merkmale:
a) die Beschichtung umfasst mindestens zwei wenigstens teilweise aus polymerem Werkstoff bestehende Schutz-schichten (1, 2), die bezüglich der Baukörperoberfläche (O) übereinanderliegend angeordnet und miteinander schub- und zugfest verbunden sind;
b) mindestens eine mit Blickrichtung auf die Baukörperoberfläche untenliegende erste Schutzschicht (1) ist als verformungsweiche Polster- und/oder Entkopplungs- und/oder Dämpfungsschicht und mindestens eine mit Blickrichtung auf die Baukörperoberfläche darüberliegende zweite Schutzschicht (2) als Panzer- und/oder Aabdichtungsschicht von hoher Festigkeit, insbesondere hoher Kerb- und/oder Weiterreissfestigkeit, und/oder von hoher Dichtheit ausgebildet.

2. Beschichtung nach Anspruch 1, dadurch gekennzeichnet, dass die erste Schutzschicht (1) einen in Bezug auf die zweite Schutzschicht (2) geringeren Zugspannungs-Verformungsmodul (E) und/oder einen ebensolchen Scherspannungs-Verformungsmodul (G) aufweist.

3. Beschichtung nach Anspruch 1 oder 2, dadurch gekennzeichnet, dass die erste Schutzschicht (1) wenigstens teilweise aus mindestens einem niedrigvernetzten Polyurethan besteht, das bei einer Temperatur von 20°C einen Zugspannungs-Verformungsmodul (E) von höchstens etwa 5 N/mm² aufweist, vorzugsweise einen solchen von höchstens etwa 3 N/mm².

4. Beschichtung nach einem der vorangehenden Ansprüche, dadurch gekennzeichnet, dass die erste Schutzschicht (1) wenigstens teilweise aus mindestens einem niedrigvernetzten Polyurethan besteht, das bei einer Temperatur von 20°C eine Zug-Bruchdehnung (ε _{ZB}) im Bereich zwischen etwa 1000 % und etwa 1900 % aufweist, vorzugsweise eine solche von etwa 1500 %.

5. Beschichtung nach einem der vorangehenden Ansprüche, dadurch gekennzeichnet, dass der Zugspannungs-Verformungsmodul (E) und/oder der Scherspannungs-Verformungsmodul (G) der ersten Schutzschicht (1) zu dem entsprechenden Modulwert der zweiten Schutzschicht (2) in einem Verhältnis von 1 zu mindestens etwa 3 bemessen ist.

6. Beschichtung nach Anspruch 5, dadurch gekennzeichnet, dass der Zugspannungs-Verformungsmodul (E) und/oder der Scherspannungs-Verformungsmodul (G) der ersten Schutzschicht (1) zu dem entsprechenden Modulwert der zweiten Schutzschicht (2) in einem Verhältnis von 1 zu mindestens etwa 5 bemessen ist.

7. Beschichtung nach Anspruch 6, dadurch gekennzeichnet, dass der Zugspannungs-Verformungsmodul (E) und/oder der Scherspannungs-Verformungsmodul (G) der ersten Schutzschicht (1) zu dem entsprechenden Modulwert der zweiten Schutzschicht (2) in einem Verhältnis von 1 zu mindestens etwa 10 bemessen ist.

8. Beschichtung nach einem der vorangehenden Ansprüche, dadurch gekennzeichnet, dass die zweite Schutzschicht (2) wenigstens teilweise aus mindestens einem niedrigvernetzten Polyurethan besteht, das bei einer Temperatur von 20°C eine Zugfestigkeit (σ _{ZB}) von mindestens etwa 40 N/mm² aufweist, vorzugsweise eine solche von mindestens etwa 60 N/mm².

9. Beschichtung nach einem der vorangehenden Ansprüche, dadurch gekennzeichnet, dass die zweite Schutzschicht (2) wenigstens teilweise aus mindestens einem niedrigvernetzten Polyurethan besteht, das bei einer Temperatur von 20°C einen Zugspannungs-Verformungsmodul (E) im Bereich zwischen etwa 15 N/mm² und etwa 50 N/mm² aufweist, vorzugsweise einen solchen von etwa 20 N/mm².

10. Beschichtung nach einem der vorangehenden Ansprüche, dadurch gekennzeichnet, dass die zweite Schutzschicht (2) wenigstens teilweise aus mindestens einem niedrigvernetzten Polyurethan besteht, das bei einer Temperatur von 20°C eine Zug-Bruchdehnung (ε_{ZB}) von mindestens etwa 100 % aufweist, vorzugsweise von mindestens etwa 500 %.

11. Beschichtung nach einem der vorangehenden Ansprüche, dadurch gekennzeichnet, dass die erste Schutzschicht (1) eine in Bezug auf die zweite Schutzschicht (2) wenigstens annähernd gleiche oder grössere Dicke aufweist.

12. Beschichtung nach einem der vorangehenden Ansprüche, gekennzeichnet durch mindestens eine auf der Baukörperoberfläche (O) angeordnete Haftvermittlungsschicht (3)

13. Beschichtung nach einem der vorangehenden Ansprüche, dadurch gekennzeichnet, dass die Verbindungsfestigkeit zwischen der ersten und der zweiten Schutzschicht grösser als die Verbindungsfestigkeit zwischen der ersten Schutzschicht (1) und der Körperoberfläche (O) bzw. einer Haftvermittlungsschicht (3) bemessen ist.

14. Beschichtung nach einem der vorangehenden Ansprüche, dadurch gekennzeichnet, dass die erste Schutzschicht (1) eine in Bezug auf die zweite Schutzschicht (2) geringere Zugfestigkeit (σ_{ZB}) und/oder eine ebensolche Scherfestigkeit (τ_{SB}) aufweist.

15. Beschichtung nach Anspruch 14, dadurch gekennzeichnet, dass die erste Schutzschicht (1) wenigstens teilweise aus mindestens einem niedrigvernetzten Polyurethan besteht, das bei einer Temperatur von 20°C eine Zugfestigkeit (σ_{ZB}) im Bereich zwischen etwa 20 N/mm² und etwa 35 N/mm² aufweist, vorzugsweise eine solche von etwa 30 N/mm².

16. Verfahren zur Herstellung einer Beschichtung für Baukörperoberflächen, vor allem Betonoberflächen, insbesondere von durch Eisanfall beanspruchten Wasserbauten, gekennzeichnet durch folgende Verfahrensschritte:
a) auf einer Baukörperoberfläche (O) wird - vorzugsweise nach Aufbringen mindestens einer Haftvermittlungsschicht (3) - mindestens eine verformungsweiche Polster- bzw. Entkopplungs- bzw. Dämpfungsschicht als erste Schutzschicht (1) hergestellt;
b) sodann wird über der ersten Schutzschicht (1) mindestens eine zweite Schutzschicht (2) mit bezüglich der ersten Schutzschicht (1) höherer Festigkeit und/oder Dichtigkeit hergestellt und als Panzerund/oder Abdichtungsschicht mit der ersten Schutzschicht (1) in schub- und zugfeste, vorzugsweise flächenhafte Verbindung gebracht.

17. Verfahren nach Anspruch 16, dadurch gekennzeichnet, dass die Schutzschichten (1, 2) vor Ort in flüssigem Zustand aufgebracht und dort durch Polymerisation in den Endzustand überführt werden.

18. Verfahren nach Anspruch 16 oder 17, gekennzeichnet durch den Einsatz von Ein- oder Zweikomponentensystemen.

19. Verwendung einer Beschichtung nach einem der Ansprüche 1 bis 15 für den Riss-Schutz an Wasserbauten.

20. Anwendung des Verfahrens nach einem der Ansprüche 16 bis 18, zur Beschichtung von Wasserbauten.
